# EUROPÄISCHE PATENTSCHRIFT

(11) **EP 1 215 037 B1**
(45) Veröffentlichungstag und Bekanntmachung des Hinweises auf die Patenterteilung: **03.03.2004**
(21) Anmeldenummer: 01126741.6
(22) Anmeldetag: 09.11.2001
(51) Int. Cl.: B32B 3/30, E04C 2/34

(54) **Verbundplatte mit einer mit Noppen versehenen Mittelschicht, vorzugsweise aus Kunststoff und Verfahren zu deren Herstellung**
Composite panel with middle layer comprising knobs, preferentially made from plastics and method for making it
Panneau composite avec couche centrale comportant des protubérance; de préférence en matière plastique; méthode de fabrication

(30) Priorität: 14.12.2000 DE 10062341
(43) Veröffentlichungstag der Anmeldung: 19.06.2002
(73) Patentinhaber: Interplast Kunststoffe GmbH, 72221 Haiterbach (DE)
(72) Erfinder: Saathoff, Werner, 78351 Bodman-Ludwigshafen (DE); Hartl, Hermann, 72221 Haiterbach (DE)
(74) Vertreter: Maser, Jochen, Dipl.-Ing.

(56) Entgegenhaltungen:
- EP-A- 1 023 955
- FR-A- 2 325 503
- US-A1- 4 461 665
- PATENT ABSTRACTS OF JAPAN vol. 017, no. 537 (M-1487), 28. September 1993 (1993-09-28) & JP 05 147136 A (NIPPON PETROCHEM CO LTD), 15. Juni 1993 (1993-06-15)

## Beschreibung

Die Erfindung betrifft eine Verbundplatte gemäß dem Oberbegriff des Anspruchs 1 sowie ein Verfahren zu deren Herstellung gemäß Anspruch 11.

Aus der US-PS 4,461,665 ist ein dreischichtiger Verbund bekannt geworden, welcher eine Mittelschicht mit einer positiv und negativ geformten Noppe umfasst, welche zwischen einer oberen und unteren Deckschicht vorgesehen ist. Diese dreischichtige Platte umfasst zumindest eine metallische Schicht und eine oder mehrere Schichten aus Papier. Zur Verbindung der Schichten ist vorgesehen, daß zunächst eine erste Schicht zur Mittelschicht verschweißt wird, um im Anschluss daran eine zweite gegenüberliegende Schicht mit der Mittelschicht zu verschweißen. Diese positiv und negativ geformten Noppen sind zueinander beabstandet ausgebildet, so daß eine Beeinflussung der zueinander benachbarten Noppen während des Schweißvorganges nicht gegeben ist, bei welchem zunächst die untere und dann die obere Schicht mit der Mittelschicht verschweißt wird. Diese Verbundplatte weist den Nachteil auf, daß durch die Verwendung von unterschiedlichen Materialien Eigenspannungen auftreten, die Stabilität gering und deren Verformbarkeit nur bedingt ermöglicht ist. Darüber hinaus ist deren Herstellung aufwendig, da zusätzlich noch weiteres Klebematerial zu verwenden ist.

Aus der EP 1 215 037 A1 ist bereits eine Verbundplatte bekannt geworden, welche eine Mittelschicht mit einseitig ausgeformten Noppen aufweist, wobei auf beiden Seiten der Mittelschicht je eine glatte Außenschicht aufkaschiert ist. Auf der einen Seite steht die aufkaschierte Außenschicht mit Stirnflächen der einseitig ausgeformten Noppen in Verbindung. Auf der gegenüberliegenden Seite werden durch das Aufkaschieren der Außenschicht auf einen Boden der Mittelschicht, von welcher aus die Noppen sich erstrecken, versiegelte Luftkammern ausgebildet.

Diese Verbundplatte weist den Nachteil auf, daß sich die einseitig ausgeformten Noppen über die gesamte Höhe der Mittelschicht erstrecken und insbesondere aufgrund eines Negativformens der Boden der Noppen eine geringe Wandstärke aufweist. Auch im Übergangsbereich vom Boden zur zylindrischen Mantelfläche der Noppen ist aufgrund des Vakuumverformens in der Negativform eine besonders dünne Wandstärke gegeben. Dies führt zur Schwächung der Verbundplatte. Auf der gegenüberliegenden Seite der Verbundplatte sind die Verhältnisse genau umgekehrt. Die Außenschicht bildet mit Ausnahme der durch die Noppen gebildeten Hohlräume eine Verstärkung mit dem Boden der Mittelschicht. Dadurch weist diese Verbundplatte den Nachteil auf, daß diese Verbundplatte in Abhängigkeit der Einbaulage unterschiedlich starke Belastungen aufnehmen kann. Darüber hinaus kann die auf die Stirnfläche der Noppen aufkaschierte Kunststoffschicht leicht abreißen, da die verjüngten Wandstärken des Bodens der Noppen als auch des unmittelbar daran angrenzenden Bereiches der Mantelfläche aufgrund des Negativformens die Belastungen zumeist nicht aufnehmen kann. Des weiteren weist diese Verbundplatte den Nachteil auf, daß eine Verformung oder Anpassung an bestimmte Geometrien nach dem Aufheizen der Verbundplatte sehr eingeschränkt möglich ist. Zum einen deshalb, da auf der einen Seite, auf welcher der Boden der Mittelschicht mit der Außenschicht der Kunststoffplatte verbunden ist, wesentlich höhere Aufheiztemperaturen erforderlich sind, als auf der gegenüberliegenden Seite, um die Verbundplatte zur Verformung aufzuheizen. Des weiteren werden die Bereiche der Außenschicht, die nicht durch den Boden der Mittelschicht aufgrund der Ausformung der Noppen verstärkt sind, zu stark aufgeheizt, so daß diese Bereiche der Außenschicht ausbeulen oder aufbrechen können.

Darüber hinaus weist diese Verbundplatte den Nachteil auf, daß aufgrund des Herstellungsverfahrens zwischen den einzelnen Schichten der Verbundplatte hohe Eigenspannungen vorliegen. Insbesondere aufgrund der unterschiedlichen Wärmeaufnahmen auf der einen Seite, auf der die Außenschicht am Boden der Mittelschicht anliegt und der gegenüberliegenden Außenschicht, welche nur auf den Stirnflächen der Noppen aufkaschiert ist, entstehen durch die unterschiedlichen Längenausdehnungen Eigenspannungen, welche ein Verziehen der Kunststoffplatte unterstützt.

Der Erfindung liegt deshalb die Aufgabe zugrunde, eine Verbundplatte zu schaffen, welche eine hohe Eigensteifigkeit und geringe Eigenspannungen aufweist und durch Verformen an unterschiedliche Geometrien anzupassen sowie schnell und einfach herzustellen ist.

Diese Aufgabe wird durch eine Verbundplatte gemäß den Merkmalen des Anspruchs 1 gelöst.

Diese Verbundplatte ermöglicht, daß durch die beidseitig einer Mittenebene ausgeformten Noppen eine gleichmäßige Materialverteilung für die Noppen gegeben ist, so daß während der Verformung der Mittelschicht zur Ausbildung der Noppen ein Nachfließen des Materials aus den zwischen den Noppen entstehenden Verbindungsabschnitten in die ausgeformten Noppen erfolgen kann. Dadurch kann sowohl die Wandstärke des Bodens der Noppe als auch die Mantelfläche, insbesondere im Übergangsbereich zum Boden, deutlich verbessert und verstärkt ausgebildet sein. Des weiteren weist diese Verbundplatte den Vorteil auf, daß die positiv und negativ geformten Noppen aneinandergrenzend angeordnet sind und einen Übergangsbereich aufweisen, welcher sich geradlinig zwischen den Stirnflächen der positiv und negativ geformten Noppe erstreckt. Dadurch ist eine steife Verbindung zwischen den beiden Stirnflächen gegeben, welche insbesondere bei einer quadratischen Rasterung beziehungsweise Anordnung der Noppen in Zeilen und Spalten eine hohe Kraftaufnahme ermöglicht. Des weiteren ist die Kontaktfläche zu der oder den aufkaschierten Schichten auf jeder Seite der Mittelschicht gleich ausgebildet.

Insbesondere ist vorgesehen, daß auf jeder Seite der Mittelschicht zumindest eine Schicht angeordnet ist. Dadurch weist diese Verbundplatte unabhängig der Einbaulage oder -richtung eine gleichbleibende Eigensteifigkeit und Belastbarkeit auf. Durch die beidseitig einer Mittenebene ausgeformten Noppen wird die Verformbarkeit der Verbundplatte deutlich erhöht. Diese Verbundplatte ist ohne Einschluß von Luftpolstern ausgebildet und weist darüber hinaus auf beiden Seiten dieselben Verhältnisse in Bezug auf die Kontaktfläche zwischen der Stirnfläche der Noppe und der aufkaschierten Schicht auf, so daß auf beiden Seiten eine gleichmäßige Erwärmung und anschließende Verformung erfolgen kann.

Nach einer vorteilhaften Ausgestaltung der Erfindung ist vorgesehen, daß die Mittelschicht vorgereckte positiv und negativ geformte Noppen zur Mittenebene aufweist. Dadurch kann in kostengünstiger Weise eine Herstellung einer homogenen und stabilen Mittelschicht erfolgen, bei welcher die positiv und negativ geformte Noppe von nahezu gleicher oder gleicher Qualität sind. Die Begriffe positiv und negativ bedeuten unterschiedliche Erhebungsrichtungen zur Mittelebene. Durch das Vorrecken, welches insbesondere symmetrisch zur Mittelebene erfolgt, wird eine Mittelschicht mit Noppen geschaffen, welche quasi ausschließlich aus geformten Noppen nach dem Positiv-Umformverfahren hergestellt sind.

Nach einer weiteren vorteilhaften Ausgestaltung der Erfindung ist vorgesehen, daß die positiv und negativ geformten Noppen der Mittelschicht symmetrisch zueinander ausgebildet sind. Dadurch wird ein Verzug der Verbundplatte, bestehend aus wenigstens drei Schichten, weitgehendst dezimiert. Die Eigenspannungen werden verringert, wodurch die Tragfähigkeit und auch Eigensteifigkeit der Verbundplatte erhöht wird.

Nach einer weiteren vorteilhaften Ausgestaltung der Erfindung ist vorgesehen, daß der Abstand der Mittenebene zu den Stirnflächen der Positiv- und Negativnoppen gleich ausgebildet ist. Dadurch wird die Symmetrie im Aufbau der Verbundplatte des weiteren erhöht. Die zwischen den positiv und negativ geformten Noppen ausgebildeten Verbindungsabschnitte liegen zumindest teilweise in der Mittenebene, welche gleichzeitig die neutrale Faser der Verbundplatte darstellt. Dadurch ist die Biegesteifigkeit der Verbundplatte unabhängig der Einbaurichtung gleich.

Alternativ zu dieser Ausgestaltung kann vorgesehen sein, daß beispielsweise die negativ geformte Noppe in der Höhe betragsmäßig geringer als die positiv geformte Noppe ausgebildet ist. Alternativ kann auch vorgesehen sein, daß die Verhältnisse in Bezug auf die Höhe der positiv und negativ ausgeformten Noppe vertauscht sind. In Abhängigkeit des Anwendungsfalles kann die Lage der Mittenebene zwischen den zumindest zwei an der Mittelschicht angeordneten Schichten beliebig angeordnet sein.

Nach einer weiteren vorteilhaften Ausgestaltung der Erfindung ist vorgesehen, daß die positiv und negativ geformten Noppen in regelmäßigen Abständen zeilen- und spaltenförmig zueinander angeordnet sind, wobei - entlang einer Zeile oder Spalte gesehen - die positiv und negativ geformten Noppen abwechselnd zueinander vorgesehen sind. Dadurch kann eine gleichmäßige Anordnung von Positiv- und Negativnoppen gegeben sein, weiche darüber hinaus die Steifigkeit der Verbundplatte nach dem Aufkaschieren der Schichten auf beiden Seiten der Mittelschicht erhöht. Durch diese Symmetrie ist auch ein vereinfachtes Zuschneiden der Verbundplatte auf bestimmte Maße ermöglicht. In Abhängigkeit der Schnittlinie kann ein bestimmtes Schnittbild ausgewählt werden. Des weiteren kann durch diese Anordnung die Anzahl der Noppen wesentlich erhöht werden, wodurch die Verbindungsfläche zwischen den Stirnflächen der Noppen und der aufkaschierten Schichten erhöht wird. Des weiteren ist sowohl auf der einen Seite als auch auf der anderen Seite der Mittenebene der Mittelschicht betragsmäßig die gleiche Fläche zum Aufkaschieren der Schichten vorgesehen.

Nach einer weiteren vorteilhaften Ausgestaltung der Erfindung ist vorgesehen, daß die Stirnfläche der Noppen im Verhältnis zur Abstandsfläche zwischen zwei positiv oder negativ geformten Noppen klein ausgebildet ist. Dadurch wird ermöglicht, daß sowohl die Mantelfläche der Noppen als auch der Boden der Noppen eine hinreichende Wandstärke nach dem Positiv- und Negativformen aufweisen, wodurch die Stabilität der Verbundplatte erhöht werden kann.

Nach einer weiteren vorteilhaften Ausgestaltung der Erfindung ist vorgesehen, daß zwischen den Übergangsbereichen Verbindungsabschnitte ausgebildet sind, die im Bereich der Mittenebene vorgesehen sind. Dadurch kann ein symmetrischer Aufbau der Verbundplatte erfolgen. Diese Verbindungsabschnitte gehen vorteilhafterweise fließend in den Übergangsbereich und in die Mantelfläche und in den Boden der Noppen über. Alternativ ist vorgesehen, insbesondere bei einer kontinuierlichen Herstellung der Mittelschicht durch ein Walzen- oder Bandpaar, daß die Verbindungsabschnitte sich annähern an eine in zwei Dimensionen sich erstreckende Ebene. Dadurch sind quasi zwei getrennte Kammern innerhalb der Schichten der Verbundplatte gebildet, die auch eine Durchführung von unterschiedlichen Medien, beispielsweise zum Kühlen, Aufheizen, Dämmen oder ähnlichem ermöglichen.

Nach einer weiteren vorteilhaften Ausgestaltung der Erfindung ist vorgesehen, daß die Noppen kegelstumpfförmig ausgebildet sind. Dadurch lassen sich besonders fließende Übergänge ausbilden. Des weiteren kann auch eine geeignete Luftzirkulation zwischen den aufkaschierten Schichten ermöglicht sein. Alternativ können ebenso pyramidenstumpfförmige, halbkugelförmige Noppen mit einer Abflachung, mehreckförmige Noppen mit Abflachung oder sonstige Geometrien zur Ausbildung der Noppen vorgesehen sein.

Diese Verbundplatte wird erfindungsgemäß durch ein Verfahren gemäß Anspruch 11 hergestellt. Dieses Verfahren weist den Vorteil auf, daß eine Verbundplatte herstellbar ist, welche geringere Eigenspannungen gegenüber der aus dem Stand der Technik bekannten Platte aufweist. Des weiteren ist das Aufkaschieren der Schichten auf beiden Seiten der Mittelschicht erleichtert, da lediglich die Stirnflächen der Noppen mit den Schichten zu verschweißen sind.

Vorteilhafterweise ist vorgesehen, daß die Schichten in der Kaschierstation gleichzeitig auf beiden Seiten der Mittelschicht aufgebracht werden.

Dadurch kann in einer Kaschierstation die Verbundplatte fertiggestellt werden. Darüber hinaus treten an beiden Seiten der Mittelschicht dieselben Verspannungen auf, welche durch Vorrecken der Mittelschicht ausgeglichen werden.

Nach einer weiteren vorteilhaften Ausgestaltung der Erfindung ist vorgesehen, daß die Herstellung der Mittelschicht und das Aufkaschieren der Schichten auf beiden Seiten der Mittelschicht kontinuierlich durchgeführt wird. Dadurch kann ein hoher Durchsatz und eine hohe Produktivität für die Herstellung der Verbundplatte gegeben sein.

Weitere vorteilhafte Ausgestaltungen des Verfahrens sind in den weiteren Ansprüchen angegeben.

Anhand der nachfolgenden Beschreibung und den Zeichnungen wird ein bevorzugtes Ausführungsbeispiel einer Verbundplatte und ein Verfahren zu dessen Herstellung näher beschrieben. Es zeigen
- Figur 1: eine perspektivische Ansicht einer Verbundplatte,
- Figur 2: eine Draufsicht auf eine Mittelschicht der Verbundplatte,
- Figur 3: eine schematische Schnittdarstellung einer Mittelschicht entlang der Linie III-III in Figur 2,
- Figur 4: eine schematische Schnittdarstellung einer Verbundplatte entlang einer Linie IV-IV in Figur 2 der Mittelschicht und
- Figur 5: eine schematische Darstellung von Verfahrensschritten zur Herstellung der erfindungsgemäßen Verbundplatte.

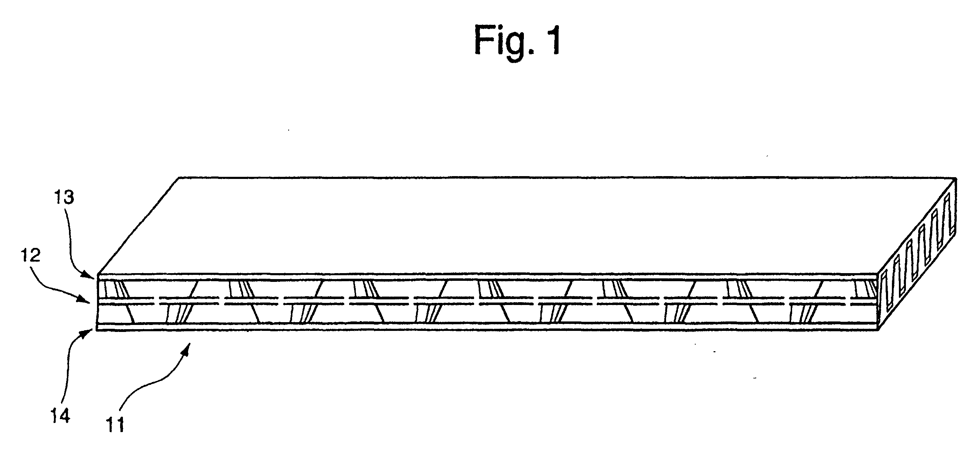

In Figur 1 ist eine Verbundplatte 11 perspektivisch dargestellt. Diese Verbundplatte 11 weist eine Mittelschicht 12 auf, welche beidseitig von einer Schicht 13 und 14 umgeben ist. Eine derartige Verbundplatte 11 ist beispielsweise vollständig aus Kunststoff hergestellt. Hierbei kann beispielsweise HDPE, PE oder PP, PS, ABS oder dgl. als Kunststoff zum Einsatz kommen. Derartige Verbundplatten werden beispielsweise in der Automobiltechnik für Boden-, Seiten- und Dachverkleidungen eingesetzt und gegebenenfalls mit zusätzlichen Schichten kaschiert. Darüber hinaus kann die Verbundplatte als Hohlraumauskleidung, Trennwand oder Abdeckung, für Mehrwegverpackungen als Steck- oder Klappbox als auch für Verpackungen für Maschinen und Apparatenteile eingesetzt werden; ebenso als Versteifungs- und Einlegeteile, Leichtgewichtskoffer, Materialien für den Bausektor oder dergleichen. In Abhängigkeit der Einsatzfälle wird der Kunststoff ausgewählt. Ebenso werden daran angepaßt die Wandstärken der Schichten 13 und 14 als auch der Mittelschicht 12 sowie deren gesamten Dimensionierung ausgewählt.

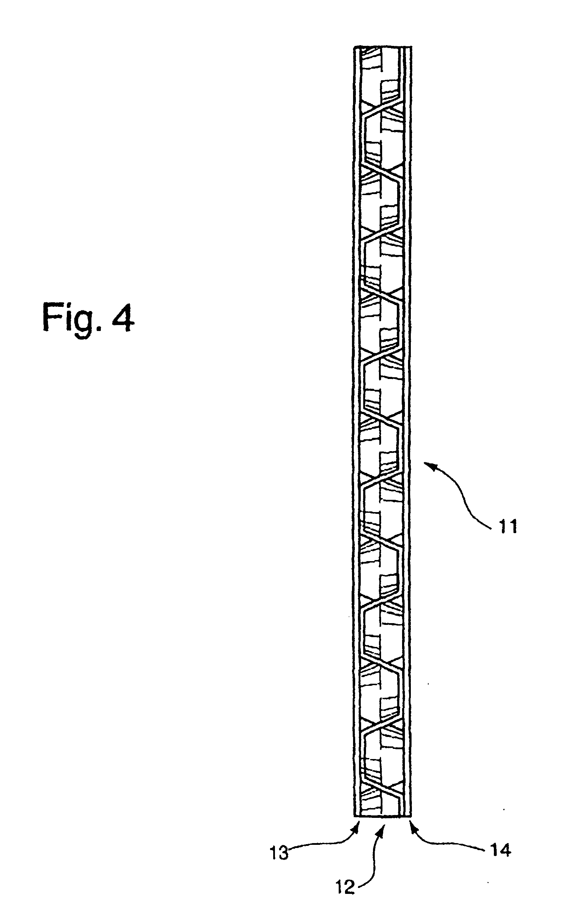

Nach einer weiteren Ausführungsform der Verbundplatte ist vorgesehen, eine Mittelschicht und auf einer der beiden Seiten der Noppen eine oder mehrere Schichten aufzubringen. Die Verbundplatte kann für Anwendungen, deren Belastbarkeit geringer und/oder Anpassungsfähigkeit größer als bei der Verbundplatte gemäß den Figuren 1 und 4 erforderlich ist, eingesetzt werden.

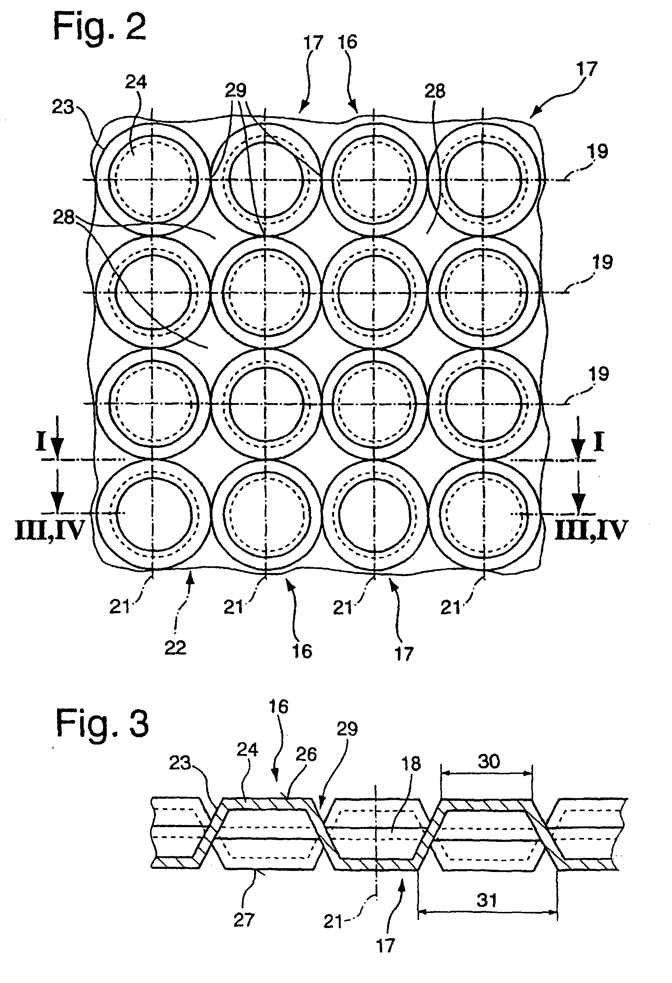

In den Figuren 2 und 3 ist die Mittelschicht 12 näher dargestellt. Die Mittelschicht 12 weist positiv geformte Noppen 16 und negativ geformte Noppen 17 auf, welche gegenüber einer Mittelebene 18 der Mittelschicht 12 ausgeformt sind. Die positiv geformten Noppen 16 und negativ geformten Noppen 17 sind in Zeilen 19 und Spalten 21 angeordnet, wobei im Ausführungsbeispiel der Zeilenabstand und der Spaltenabstand gleich ausgebildet ist. Es können auch unregelmäßige Abstände vorgesehen sein, um gegebenenfalls besondere Wirkungen, insbesondere beim Einbringen von Verformungen, zu erzielen. Der Zeilenabstand als auch der Spaltenabstand bestimmt sich von der Mitte der einen Noppe 16, 17 zur Mitte der benachbarten Noppe17, 16. Die Noppen 16, 17 sind dabei entlang den Zeilen 19 und Spalten 21 abwechselnd aneinandergrenzend angeordnet, so daß zwischen zwei positiv geformten Noppen 16 eine negativ geformte Noppe 17 und umgekehrt vorgesehen ist. Dadurch ergibt sich eine Rasterung 22, welche in der Draufsicht gemäß Figur 2 als auch in der Schnittdarstellung gemäß Figur 3 zu entnehmen ist. Die positiv als auch negativ geformte Noppen 16 und 17 weisen eine Mantelfläche 23 auf, welche in einen Boden 24 übergeht. Die Außenseite des Boden 24 der Noppe 16, 17 bildet die Stirnfläche 26 und 27 der Noppen 16 und 17, auf welche die Schicht 13, 14 aufgebracht wird.

Zwischen zwei zueinander beabstandeten positiv geformten Noppen 16 und negativ geformten Noppen 17, welche jeweils auf einer Geraden liegen, die diagonal zu den Zeilen 19 und Spalten 21 läuft, ist ein Verbindungsabschnitt 28 ausgebildet. Dieser Verbindungsabschnitt 28 ist vorteilhafterweise als dreidimensionaler Übergang zu den benachbarten Noppen 16, 17 ausgebildet. Im Ausführungsbeispiel ist der Verbindungsabschnitt 28 teilweise eben ausgebildet und liegt im Bereich der Mittelebene 18. Dieser Verbindungsabschnitt 28 bildet gleichzeitig eine neutrale Faser der Verbundplatte 11, wodurch eine in der Einbaurichtung unabhängige Verbundplatte 11 geschaffen ist. Dies geht beispielsweise aus einer Schnittdarstellung entlang der Linie I-I in Figur 2 hervor, die in Figur 1 als Seitenansicht über die Dicke der Verbundplatte 11 dargestellt ist.

Zwischen einer positiv geformten Noppe 16 und einer negativ geformten Noppe 17 ist ein Übergangsbereich 29 ausgebildet, welcher bereichsweise wenigstens geradlinig von der Stirnfläche 26 der Noppe 16 bis zur Stirnfläche 27 der Noppe 17 ausgebildet ist. Dadurch werden günstige Kraftübertragungsverhältnisse geschaffen. Sofern der Abstand zwischen den Noppen 16, 17 größer gehalten ist, kann der Übergangsbereich auch gestuft ausgebildet sein.

Durch die rasterförmige Anordnung gemäß Figur 2 kann eine Vielzahl von Noppen 16, 17 ausgebildet werden, wodurch die Traglast als auch die Steifigkeit aufgrund der erhöhten Kontaktfläche zwischen der Stirnfläche 26, 27 der Noppen 16, 17 und der Schicht 13, 14 gegeben ist.

Im Ausführungsbeispiel sind die Noppen 16, 17 kegelstumpfförmig ausgebildet. Vorteilhafterweise ist der Durchmesser der Stirnfläche 26, 27 kleiner als die Abstandsfläche zwischen zwei positiv geformten 16 oder zwei negativ geformten Noppen 17. Die Verbundplatte 11 gemäß dieser Ausführungsform weist beispielsweise einen Durchmesser 30 einer Stirnfläche von 5,5 mm auf und eine Abstandsfläche 31 bzw. einen maximalen Abstand zwischen den Randbereichen der zueinander beabstandeten positiv geformten Noppen 16 oder negativ geformten Noppen 17 von 9 mm auf. Ein Verhältnis zwischen der Abstandsfläche 31 und der Stirnfläche 26, 27 von weniger als 1: 1,5 ist besonders vorteilhaft für die Ausgestaltung der Mittelschicht 12. Dadurch kann ein hinreichend dicker Boden 24 der Noppen 16, 17 und eine hinreichend steife Mantelfläche 23, insbesondere im Übergangsbereich zum Boden 24 der Noppen 16, 17, ausgebildet sein. Darüber hinaus weisen die Anordnungen der Verbindungsabschnitte 28 den Vorteil auf, daß während dem Formen der Noppen 16, 17 ein hinreichendes Nachfließen des Materials in die Noppen 16, 17 erfolgt. Aufgrund der Verformung der Noppen 16, 17 beidseitig zur Mittelebene 18 ist eine Ausformung der Noppe 16, 17 nur um die halbe Höhe zur Ausbildung der Mittelschicht 12 erforderlich, wodurch wiederum ein erhöhter Betrag an Material für die positiv und negativ geformte Noppe zur Verfügung gestellt wird, um diese steifer auszubilden.

Die Gesamtstärke der Verbundplatte 11 wird durch die Wandstärke der Schichten 13, 14 als auch durch die Höhe der Noppen 16, 17 bestimmt. Gemäß dem Ausführungsbeispiel ist vorgesehen, daß die Höhe der positiv geformten Noppe und die Höhe der negativ geformten Noppe gleich ausgebildet sind und durch die gegenläufige Ausformung der Noppen die Gesamthöhe der Mittelschicht 12 bestimmt ist. Die Verbundplatte 11 kann auch durch unterschiedliche Materialien ausgebildet werden. Beispielsweise kann die Mittelschicht 12 aus einem schlagzähen Kunststoff ausgebildet sein und die Schichten 13 und 14 können aus einem von diesem abweichenden Kunststoffmaterial ausgebildet sein. In Abhängigkeit des Anwendungsfalles können auch die Schichten 13, 14 und die Mittelschicht 12 jeweils abweichend voneinander ausgebildet sein. Ebenso kann vorgesehen sein, daß zwischen den Stirnflächen 26, 27 der Noppen 16, 17 und der Schicht 13, 14 eine weitere plattenförmige Schicht angeordnet ist, die zusätzliche Funktionen aufweisen kann. Bei unterschiedlichen Materialien der Schichten 13, 14 können auch die Wandstärken unterschiedlich ausgebildet sein, sofern die Symmetrie hinsichtlich der Belastbarkeit der Verbundplatte beizubehalten ist. Ebenso kann vorgesehen sein, daß durch unterschiedliche Materialien der Schichten 13, 14 oder ungleich dicken Schichten 13, 14 bei gleichen Materialien eine Verspannung in die Verbundplatte 11 eingebracht wird. Ebenso können unterschiedliche Dicken der Schichten 13, 14 vorgesehen sein, wenn beispielsweise auf eine Schicht 13 oder 14 eine weitere Schicht, wie beispielsweise ein Teppich aufgebracht wird, um die Verspannung dieser Teppichschicht oder dergleichen auszugleichen.

Die Schicht 13 und 14 ist an ihrer Außenseite als plane Fläche ausgebildet. Für bestimmte Anwendungsfälle können weitere Schichten teilweise oder vollständig aufgeklebt oder aufkaschiert werden. Beispielsweise können Schaumstoffschichten oder besondere Isolierschichten oder Trennschichten, die leitend sind oder in Bezug auf bestimmte Medien widerstandsfähig sind, auf die Schicht aufgebracht oder selbst als Schicht auf die Mittelschicht aufgebracht sein. Es können auch metallische, nichteisenmetallische Schichten als Schicht 13, 14 sowie aus Legierungen bestehende Leichtmetallschichten wie beispielsweise eine Aluminiumlegierung vorgesehen sein.

in Figur 4 ist ein Schnitt entlang der Linie IV-IV in Figur 2 dargestellt, wobei zusätzlich gegenüber Figur 2 die Schicht 13 und 14 auf den Stirnflächen 26, 27 der Noppen 16, 17 vorgesehen ist. Aus dieser Schnittdarstellung geht ebenfalls wie aus den Figuren 1 bis 3 der symmetrische Aufbau der Verbundplatte 11 hervor. Die Schichten 13, 14 als auch die Stirnflächen 26, 27 der Noppen 16, 17 werden vor dem Aufkaschieren erwärmt und unter leichtem Druck gegeneinander gepreßt, wodurch ein Verschweißen der Schichten 13, 14 erfolgt. Alternativ kann vorgesehen sein, daß zusätzlich auf den Stirnflächen klebeunterstützende Materialien oder verbindungsaktivierende Stoffe aufgebracht sind, um die Verbindung zwischen den Schichten 13, 14 und der Mittelschicht 12 zu erhöhen.

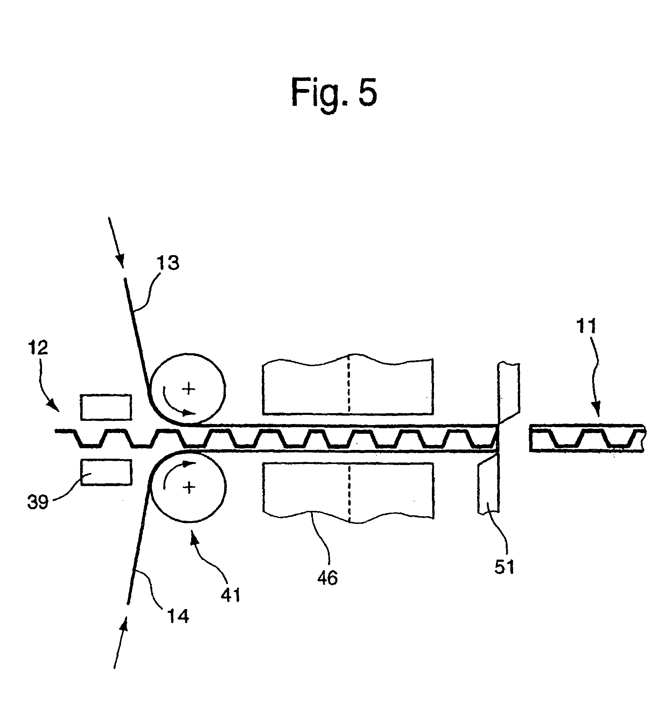

In Figur 5 ist ein Verfahren zur Herstellung der erfindungsgemäßen Verbundplatte 11 dargestellt.

Die Mittelschicht 12 wird entweder separat hergestellt und als Rollenbahn oder als Plattenmaterial bereitgestellt. Alternativ kann auch durch ein Walzen- oder Bandpaar die Mittelschicht 12 hergestellt und als erste Station einer Fertigungsstraße vorgesehen sein. Durch das Walzen- oder Bandpaar wird vorteilhafterweise ein Vorrecken des Materials zur Herstellung einer Mittelschicht 12 mit positiv und negativ geformten Noppen gleicher Qualität, insbesondere im Hinblick auf die Wandstärke durchgeführt. Durch eine Vakuumansaugung wird die vorgereckte Schicht an eine Walze oder ein Band angesaugt, um durch Vakuumtiefziehen die Endform der Noppen der Mittelschicht zu bilden.

Im Anschluß an die Herstellung oder Bereitstellung der Mittelschicht 12 wird diese einer Kaschierstation 41 zugeführt. Hierbei ist vorgesehen, daß die Schichten 13, 14 vorgefertigt zugeführt oder daß diese unmittelbar aus einer vorgeschalteten Extrudierstation zugeführt werden. Die Schichten 13, 14 werden vorteilhafterweise gleichzeitig auf die Mittelschicht 12 aufkaschiert. Dadurch lassen sich geringere Eigenspannungen in der Verbundplatte 11 erzielen. Bevor die Mittelschicht 12 in die Kaschierstation 41 einläuft, werden zumindest die Stirnflächen 26, 27 der Noppen 16, 17 durch eine Heiz- oder Bestrahlungseinheit 39 aufgeheizt. Die Mittelschicht 12 wird vorteilhafterweise vor der Zuführung in die Kaschierstation 41 in zumindest Querrichtung vorgereckt, um nach der Abkühlung geringe Eigenspannungen zwischen den Schichten 13 und 14 und der Mittelschicht 12 aufzuweisen. Die Mittelschicht 12 wird dergestalt zugeführt, daß die Zeilen 19 und Spalten 21 der Noppen 16, 17 diagonal zur Förderrichtung ausgerichtet sind.

Nach dem Aufkaschieren der Schichten 13, 14 wird die Verbundplatte 11 einer Kühlstation 46 zugeführt. In einer nachfolgenden Schneideinheit 51 werden die Verbundplatten 11 auf vorbestimmte Längen vorkonfektioniert. Alternativ kann vorgesehen sein, daß die Kaschierung der Schichten 13 und 14 nacheinander erfolgt, um durch Vorreckung in den einzelnen Zwischenstufen eine geringere Eigenspannung in der Verbundplatte 11 zu erzielen.

## Patentansprüche

1. Verbundplatte, vorzugsweise aus Kunststoff, bestehend aus einer dreidimensional verformten Mittelschicht (12) und zumindest auf einer der Seiten der Mittelschicht (12) angeordneten Schicht (13, 14), wobei die Mittelschicht (12) beidseitig der Mittelebene (18) ausgeformte Noppen (16, 17) aufweist, deren Stirnflächen (26, 27) zumindest teilweise parallel zur Mittelebene (18) angeordnet sind und eine Kontaktfläche zur Aufnahme der zumindest einen Schicht (13, 14) bilden, **dadurch gekennzeichnet, daß** die positiv und negativ geformten Noppen (16, 17) aneinandergrenzend angeordnet sind und einen Übergangsbereich (29) aufweisen, welcher sich geradlinig zwischen der Stirnfläche (26) der positiv geformten Noppe (16) und der Stirnfläche (27) der negativ geformten Noppe (17) erstreckt.

2. Verbundplatte nach Anspruch 1, **dadurch gekennzeichnet, daß** auf jeder Seite der Mittelschicht (12) zumindest eine Schicht (13, 14) vorgesehen ist.

3. Verbundplatte nach Anspruch 1 oder 2, **dadurch gekennzeichnet, daß** die Mittelschicht (12) vorgereckte positiv und negativ geformte Noppen (16, 17) zur Mittelebene (18) aufweist.

4. Verbundplatte nach einem der vorhergehenden Ansprüche, **dadurch gekennzeichnet, daß** die positiv und negativ geformten Noppen (16, 17) der Mittelschicht (12) symmetrisch zueinander ausgebildet sind.

5. Verbundplatte nach einem der vorhergehenden Ansprüche, **dadurch gekennzeichnet, daß** der Abstand der Mittelebene (18) zu den Stirnflächen (26, 27) der positiv und negativ ausgeformten Noppen (16, 17) gleich ausgebildet ist.

6. Verbundplatte nach einem der vorhergehenden Ansprüche, **dadurch gekennzeichnet, daß** die positiv und negativ geformten Noppen (16, 17) in regelmäßigen Abständen zeilen- und spaltenförmig zueinander angeordnet sind und vorzugsweise entlang einer Zeile (19) oder Spalte (21) die positiv und negativ geformten Noppen (16, 17) abwechselnd zueinander vorgesehen sind.

7. Verbundplatte nach einem der vorhergehenden Ansprüche, **dadurch gekennzeichnet, daß** die Stirnfläche (26, 27) der Noppen (16, 17) im Verhältnis zur Abstandsfläche (31) zwischen zwei positiv und negativ geformten Noppen (16,17) klein ausgebildet ist.

8. Verbundplatte nach Anspruch 1, **dadurch gekennzeichnet, daß** zwischen den Übergangsbereichen (29) Verbindungsabschnitte (28) ausgebildet sind, welche in der Mittelebene (18) vorgesehen sind.

9. Verbundplatte nach Anspruch 8, **dadurch gekennzeichnet, daß** die Verbindungsabschnitte (28) im wesentlichen eben ausgebildet sind und in oder parallel zur Mittelebene (18) angeordnet sind.

10. Verbundplatte nach einem der vorhergehenden Ansprüche, **dadurch gekennzeichnet, daß** die Noppen (16, 17) kegelstumpfförmig ausgebildet sind und deren betragsmäßige Höhe von der Mittelebene (18) aus gesehen gleich ausgebildet ist.

11. Verfahren zur Herstellung einer Verbundplatte (11), vorzugsweise aus Kunststoff, bestehend aus einer Mittelschicht (12) und zumindest auf einer Seite der Mittelschicht (12) angeordneten Schicht (13, 14), insbesondere gemäß einem oder mehreren der vorangegangenen Ansprüche 1 bis 10, bei dem eine Mittelschicht (12) mit beidseitig zur Mittelebene (18) angeordneten Noppen (16, 17) zum Aufkaschieren von zumindest einer Schicht (13, 14) einer Kaschierstation (41) zugeführt wird und in der Kaschierstation (41) die Mittelschicht (12) beidseitig und gleichzeitig mit zumindest einer Schicht (13, 14) kaschiert wird und bei dem die Verbundplatte (11), bestehend aus einer Mittelschicht (12) und zumindest einer daran angeordneten Schicht (13, 14), aus der Kaschierstation herausgeführt und einer Kühlstation (46) zugeführt wird, **dadurch gekennzeichnet, daß** vor dem Kaschieren der Schichten (13, 14) auf die Mittelschicht (12) die Stirnflächen (26, 27) der Noppen (16, 17) aufgeheizt werden.

12. Verfahren nach Anspruch 11, **dadurch gekennzeichnet, daß** vor dem Kaschieren der Schichten (13,14) die Mittelschicht (12) in zumindest eine Richtung vorgereckt wird.

13. Verfahren nach Anspruch 11 oder 12, **dadurch gekennzeichnet, daß** die Herstellung der Mittelschicht (12) und deren Kaschieren kontinuierlich im Inlineverfahren durchgeführt wird.

14. Verfahren nach einem der Ansprüche 11 bis 13, **dadurch gekennzeichnet, daß** die Schichten (13, 14) im Chillroll-Verfahren hergestellt und unmittelbar der Kaschierstation zugeführt werden.

15. Verfahren nach Anspruch 11, **dadurch gekennzeichnet, daß** die zeilen- und spaltenförmige Anordnung der positiv und negativ geformten Noppen (16, 17) diagonal zur Transportrichtung ausgerichtet sind und der Kaschierstation (41) zugeführt werden.

16. Verfahren nach einem der Ansprüche 11 bis 15, **dadurch gekennzeichnet, daß** die Mittelschicht (12) durch ein Walzen- oder Bandpaar hergestellt wird und das Walzen- oder Bandpaar vorzugsweise der Kaschierstation (41) vorgeschalten ist.

## Claims

1. A composite panel, preferably of plastic, comprising a three-dimensionally deformed middle layer (12) and at least one layer (13, 14) arranged on at least one side of the middle layer (12), said middle layer (12) comprises protrusions (16, 17) formed on both sides of a midplane (18) with a plurality of end surfaces (26, 27) arranged at least partially parallel to the midplane (18), and a contact surface to receive the at least one layer (13, 14), **characterized in, that** the positively and negatively formed protrusions (16, 17) are arranged adjacent to one another and comprise transition regions (29) which extend in a straight line between an end surface (26) of the positively formed protrusion (16) and an end surface (27) of the negatively formed protrusion (17).

2. The composite panel according to claim 1, **characterized in, that** the at least one layer (13, 14) is provided on each side of the middle layer (12).

3. The composite panel according to claim 1 or 2, **characterized in, that** the middle layer (12) comprises predrawn positively and negatively formed protrusions (16, 17) with respect to the midplane (18).

4. The composite panel according to one of the proceeding claims, **characterized in, that** the positively and negatively formed protrusions (16, 17) of the middle layer (12) are arranged symmetrically of one another.

5. The composite panel according to one of the proceeding claims, **characterized in, that** a distance of the midplane (18) to the end surfaces (26, 27) of the positively and negatively formed protrusions (16, 17) are equal.

6. The composite panel according to one of the proceeding claims, **characterized in, that** the positively and negatively formed protrusions (16, 17) are arranged in rows and columns at regular spacings from one another, and the positively and negatively formed protrusions (16, 17) are provided mutually alternating along a row (19) or a column (21).

7. The composite panel according to one of the proceeding claims, **characterized in, that** the end surfaces (26, 27) of the protrusions (16, 17) are small in relation to a surface distance (31) between two positively and negatively formed protrusions (16, 17).

8. The composite panel according to claim 1, **characterized in, that** connection sections (28) are provided between the transition regions (29) and in the midplane (18).

9. The composite panel according to claim 8, **characterized in, that** the connecting sections (28) are substantially planar and are arranged in or parallel to the midplane (18).

10. The composite panel according to one of the proceeding claims, **characterized in, that** the protrusions (16, 17) are frustroconical, and their quantitative height, seen from the midplane (18), are equal.

11. A process for the production of a composite panel (11), preferably of plastic comprising a middle layer (12) and at least one layer (13, 14) arranged on at least one side of the middle layer (12), in particular according to one or more of the proceeding claims 1 to 10, supplying the middle layer (12) with protrusions (16, 17) arranged on both sides of the midplane (18) to a laminating station (41) for laminating on at least one layer (13, 14), laminating the middle layer (12) on both sides simultaneously, in the laminating station (41) with at least one layer (13, 14), moving the composite panel (11), comprising the middle layer (12) and at least one layer (13, 14) arranged thereon out of the laminating station, and supplying the composite panel to a cooling station (46), **characterized in, that** a plurality of end surfaces (26, 27) of the protrusions (16, 17) are heated before lamination of the layers (13, 14) onto the middle layer (12).

12. The process according to claim 12, **characterized in, that** the middle layer (12) is predrawn in at least one direction before lamination of the layers (13, 14).

13. The process according to claim 11 or 12, **characterized in, that** the production of the middle layer (12) and its lamination is provided continuously in an in-line process.

14. The process according to one of the claims 11 to 13, **characterized in, that** the layers (13, 14) are produced in a chill roll process and are directly supplied to the laminating station (41).

15. The process according to claim 11, **characterized in, that** positively and negatively formed protrusions (16, 17) in a row and column arrangement are aligned diagonally of a transport direction and are supplied to the laminating station (41).

16. The process according to one of the claims 11 to 15, **characterized in, that** the middle layer (12) is produced by a roller pair or belt pair and preferably arranged before the laminating station (41).

## Revendications

1. Panneau composite, de préférence en matière plastique, se composant d'une couche centrale de configuration tridimensionnelle (12) et d'au moins une couche (13, 14) disposée sur l'un des côtés de la couche centrale (12), la couche centrale (12) présentant des protubérances (16, 17) formées de part et d'autre du plan médian (18), dont les faces frontales (26, 27) sont disposées au moins en partie parallèlement au plan médian (18) et forment une face de contact pour recevoir d'au moins une couche (13, 14), **caractérisé en ce que** les protubérances négatives et positives (16, 17) sont juxtaposées et présentent une zone de transition (29) qui s'étend en ligne droite entre la face frontale (26) de la protubérance positive (16) et la face frontale (27) de la protubérance négative (17).

2. Panneau composite selon la revendication 1, **caractérisé en ce que** l'on prévoit de chaque côté de la couche centrale (12) au moins une couche (13, 14).

3. Panneau composite selon la revendication 1 ou 2, **caractérisé en ce que** la couche centrale (12) présente des protubérances pré-étirées (16, 17) positives et négatives par rapport au plan médian (18).

4. Panneau composite selon l'une quelconque des revendications précédentes, **caractérisé en ce que** les protubérances (16, 17) positives et négatives de la couche centrale (12) sont réalisées de manière symétrique les unes par rapport aux autres.

5. Panneau composite selon l'une quelconque des revendications précédentes, **caractérisé en ce que** la distance du plan médian (18) aux faces frontales (26, 27) des protubérances (16, 17) positives et négatives est identique.

6. Panneau composite selon l'une quelconque des revendications précédentes, **caractérisé en ce que** les protubérances (16, 17) positives et négatives sont disposées les unes par rapport aux autres à distances uniformes en lignes et en colonnes et **en ce que** de préférence, les protubérances (16, 17) positives et négatives sont disposées en alternance les unes aux autres le long d'une ligne (19) ou d'une colonne (21).

7. Panneau composite selon l'une quelconque des revendications précédentes, **caractérisé en ce que** la face frontale (26, 27) des protubérances (16, 17) est petite par rapport à la face d'espacement (31) entre deux protubérances (16, 17) positives et négatives.

8. Panneau composite selon la revendication 1, **caractérisé en ce que** des portions de connexion (28) sont réalisées entre les zones de transition (29), lesquelles sont prévues dans le plan médian (18).

9. Panneau composite selon la revendication 8, **caractérisé en ce que** les portions de connexion (28) sont essentiellement planes et sont disposées dans le plan médian (18) ou parallèlement à celui-ci.

10. Panneau composite selon l'une quelconque des revendications précédentes, **caractérisé en ce que** les protubérances (16, 17) sont réalisées en forme de tronc de cône et leur hauteur en valeur absolue est identique, mesurée à partir du plan médian (18).

11. Procédé de fabrication d'un panneau composite (11), de préférence en matière plastique, se composant d'une couche centrale (12) et d'au moins une couche (13, 14) disposée sur l'un des côtés de la couche centrale (12), notamment selon l'une ou plusieurs des revendications précédentes 1 à 10, dans lequel une couche centrale (12) pourvue de protubérances (16, 17) disposées de part et d'autre du plan médian (18) est acheminée à un poste de contrecollage (41) en vue du contrecollage d'au moins une couche (13, 14), et la couche centrale (12) est contrecollée dans le poste de contrecollage (41) des deux côtés et simultanément avec au moins une couche (13, 14), et dans lequel le panneau composite (11), se composant d'une couche centrale (12) et d'au moins une couche (13, 14) disposée sur celle-ci, est ressorti du poste de contrecollage et est acheminé à un poste de refroidissement (46), **caractérisé en ce qu'**avant le contrecollage des couches (13, 14) sur la couche centrale (12), les faces frontales (26, 27) des protubérances (16, 17) sont chauffées.

12. Procédé selon la revendication 11, **caractérisé en ce qu'**avant le contrecollage des couches (13, 14), la couche centrale (12) est pré-étirée au moins dans une direction.

13. Procédé selon la revendication 11 ou 12, **caractérisé en ce que** la fabrication de la couche centrale (12) et son contrecollage s'effectuent en continu dans un procédé en ligne.

14. Procédé selon l'une quelconque des revendications 11 à 13, **caractérisé en ce que** les couches (13, 14) sont fabriquées dans un procédé à rouleaux refroidisseurs et sont acheminées directement au poste de contrecollage.

15. Procédé selon la revendication 11, **caractérisé en ce que** l'agencement de lignes et colonnes des protubérances (16, 17) positives et négatives est orienté en diagonale par rapport à la direction de transport et est acheminé au poste de contrecollage (41).

16. Procédé selon l'une quelconque des revendications 11 à 15, **caractérisé en ce que** la couche centrale (12) est fabriquée par une paire de cylindres ou de bandes et la paire de cylindres ou de bandes est de préférence installée avant le poste de contrecollage (41).
